# EUROPEAN PATENT APPLICATION

(11) **EP 4 825 722 A1**
(43) Date of publication of application: **21.10.2026**
(21) Application number: 26171604.7
(22) Date of filing: 10.04.2026
(51) Int. Cl.: B63B 79/40, B63B 43/00, B63B 79/10

(54) **DYNAMICALLY CONTROLLED ADAPTIVE CRUISE CONTROL SYSTEM**

(30) Priority: 14.04.2025 SE 2550352
(71) Applicant: Volvo Penta Corporation, 405 08 Göteborg (SE)
(72) Inventor: LARSSON, Annika, 431 69 MÖLNDAL (SE)
(74) Representative: Kransell & Wennborg KB

(57) **Abstract**

The present disclosure relates to a computer system comprising processing circuitry configured to set at least one control parameter of an adaptive cruise control system to control a propulsion system of an ego vehicle to maintain a preset following distance to an up-front moving object, determine a passenger status of a passenger of the ego vehicle, and configure the at least one control parameter of the adaptive cruise control system to control the propulsion system to modify the preset following distance to an increased following distance in response to the passenger status satisfying at least one predefined criterion indicative of an unsafe passenger status.

## Description

### TECHNICAL FIELD

The disclosure relates generally to adaptive cruise control for vehicles. In particular aspects, the disclosure relates to a safety controlled adaptive cruise control system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Adaptive cruise control (ACC) systems are widely used in transportation to automatically regulate vehicle speed and maintain a safe following distance to other objects in motion. The ACC systems contribute to driving comfort and safety by adjusting propulsion and braking without continuous driver input. However, there remains a need for further improvements to improve safety under varying operational conditions.

### SUMMARY

According to a first aspect of the disclosure, there is provided a computer system comprising processing circuitry configured to set at least one control parameter of an adaptive cruise control system to control a propulsion system of an ego vehicle to maintain a preset following distance to an up-front moving object, determine a passenger status of a passenger of the ego vehicle, and configure the at least one control parameter of the adaptive cruise control system to control the propulsion system to modify the preset following distance to an increased following distance in response to the passenger status satisfying at least one predefined criterion indicative of an unsafe passenger status. The first aspect of the disclosure may seek to solve the problem of maintaining safe operating conditions of an adaptive cruise control system in situations where a passenger within the ego vehicle is not in a safe position. By adapting control parameters such as the following distance based on the passenger's status, the system may contribute to reducing the risk of injury during dynamic maneuvers thereby improving overall passenger safety. A technical benefit may include improved passenger safety by enabling the adaptive cruise control system to dynamically adjust its control behavior based on passenger status. By increasing the following distance when a passenger is in an unsafe position, the system may reduce the need for sudden braking and acceleration, thereby contributing to smoother vehicle operation and minimizing the risk of injury to e.g. unrestrained or improperly positioned passengers.

The definition "ego vehicle" as used herein may refer to any transportation unit in which the disclosed computer system is installed and whose propulsion is controlled by the adaptive cruise control system. The ego vehicle may, for example, be a land-based vehicle such as a truck. As will be exemplified below, the ego vehicle may also be a water-based vehicle such as a marine vessel. Accordingly, in some examples, including in at least one preferred example, the ego vehicle is a marine vessel or a land vehicle. A technical benefit may include that the proposed system can be applied across different types of transport environments, such as marine vessels and land vehicles, which may experience different passenger behaviors and stability concerns. For marine vessels, where passengers are more likely to move about during operation, adapting cruise control behavior based on passenger status may significantly improve onboard safety. For land vehicles, such as trucks, the system may enhance safety for passengers who are seated but not restrained, particularly during deceleration or stop-and-go traffic conditions.

Furthermore, modifying the following distance may include dynamically adjusting a continuous distance value or selecting among a set of predefined following distance levels. For example, the adaptive cruise control system may support multiple predefined following distance settings, such as d1, d2, d3, and d4, where d1 represents the shortest following distance and d4 the longest following distance. In response to the passenger status satisfying at least one predefined criterion indicative of an unsafe passenger status, the system may restrict the available following distance options by disabling one or more of the shorter settings. According to one non-limiting example, only longer following distances, such as d3 and d4, may remain selectable. In other examples, the system may automatically switch to the longest available setting and prevent the processing circuitry from selecting a shorter distance until the unsafe condition is no longer present.

Optionally in some examples, including in at least one preferred example, the passenger status is determined in response to receiving passenger monitoring data received from a monitoring system of the ego vehicle. A technical benefit may include that the adaptive cruise control system is arranged to make automated adjustments based on real-time passenger monitoring data. By relying on a monitoring system of the ego vehicle to determine passenger status, the system may continuously and accurately assess safety-related conditions without requiring manual input from the driver. Hereby, improved responsiveness may be provided, reducing the risk of delayed or inappropriate system behavior, which may enhance safety for passengers.

Optionally in some examples, including in at least one preferred example, the monitoring system comprises at least one sensor configured to detect the passenger's position within the ego vehicle. A technical benefit may include that the system is capable of detecting the passenger's actual position within the ego vehicle, thereby enabling a more precise assessment of whether the passenger is located in a safe or unsafe area. By using at least one sensor configured to detect the passenger's position, the adaptive cruise control system may dynamically modify its behavior not only based on the presence of a passenger but also on the location of the passenger, which may result in a more accurate and safety-relevant adjustment of the control parameters.

Optionally in some examples, including in at least one preferred example, the at least one sensor comprises a seat sensor arranged in a passenger seat of the ego vehicle, the seat sensor being configured to detect the presence of a passenger in the passenger seat. A technical benefit may include that the system can reliably detect whether a passenger is occupying a designated seat within the ego vehicle. By using a seat sensor arranged in a passenger seat to detect the presence of a passenger, the adaptive cruise control system may determine seat occupancy with relatively high confidence. Accurate and real-time assessment of passenger status may hereby be achieved.

Optionally in some examples, including in at least one preferred example, the at least one predefined criterion indicative of an unsafe passenger status comprises an absence of a passenger from the passenger seat. A technical benefit may include that the system can classify a passenger as being in an unsafe condition based on the absence of seat occupancy. By using the absence of a passenger from a designated passenger seat as a predefined criterion for unsafe status, the adaptive cruise control system may respond appropriately to situations where a passenger is standing, moving about, or otherwise not secured. This may in particular be relevant for adaptive cruise control systems in marine vessels.

Optionally in some examples, including in at least one preferred example, the at least one sensor comprises a seat belt sensor configured to detect whether a seat belt is fastened. A technical benefit may include that the system can determine whether a passenger is restrained by detecting the fastening status of a seat belt. By using a seat belt sensor configured to detect whether a seat belt is fastened, the adaptive cruise control system may identify potentially unsafe passenger conditions even when the passenger is seated. The seat belt sensor may advantageously be used in conjunction with the above described seat sensor.

Optionally in some examples, including in at least one preferred example, the at least one predefined criterion indicative of an unsafe passenger status comprises that a seat belt is unfastened. A technical benefit may include that the adaptive cruise control system may automatically respond to situations where a seated passenger is not properly restrained.

Optionally in some examples, including in at least one preferred example, the at least one sensor comprises at least one of a vision sensor, a lidar, a radar, an infra-red sensor, a Time-of-Flight camera and a thermal camera. A technical benefit may include that the system can utilize a range of sensor technologies to detect passenger presence and position with relatively high accuracy. The specific type of sensor to use may depend on the application of the ego vehicle. Hence, different sensors may be used depending on environmental and lighting conditions for the ego vehicle.

Optionally in some examples, including in at least one preferred example, the at least one predefined criterion indicative of an unsafe passenger status comprises the passenger being located in at least one predefined zone within the ego vehicle. A technical benefit may include that the system can assess passenger safety based on the passenger's location within the ego vehicle. By defining at least one predefined zone as indicative of an unsafe area, the adaptive cruise control system may determine whether a passenger is located in a region where the risk of injury is relatively high in case of e.g. sudden deceleration. For a truck, the at least one predefined zone may be the bed behind the driver seat. For a marine vessel, the at least one predefined zone may be an area lacking e.g. a railing.

Optionally in some examples, including in at least one preferred example, the predefined zone is a seat free area of the ego vehicle. A technical benefit may include that the system can recognize that the passenger may be unable to properly hold on to an object in case of a sudden deceleration.

Optionally in some examples, including in at least one preferred example, the predefined zone is an area within the ego vehicle that lacks a railing or a handhold for a passenger to grasp. A technical benefit may include that the system can assess passenger safety based on whether the passenger is located in an area lacking physical support features. By defining the predefined zone as an area within the ego vehicle that lacks a railing or a handhold for a passenger to grasp, the adaptive cruise control system may identify situations where the passenger has limited abilities to hold on to an object in case of a sudden deceleration.

The predefined zone may be defined as a spatial region within the ego vehicle and may, for example, be represented using a two-dimensional or three-dimensional grid. In a two-dimensional implementation, the zone may correspond to specific floor areas or horizontal sections of the ego vehicle. In a three-dimensional implementation, the zone may further account for height, allowing the system to distinguish between areas such as seats, standing areas, or overhead spaces, etc.

Optionally in some examples, including in at least one preferred example, the at least one control parameter of the adaptive cruise control system comprises an acceleration parameter configured to control a maximum allowable acceleration level of the propulsion system, wherein the maximum allowable acceleration level is reduced in response to the passenger status satisfying the at least one predefined criterion indicative of an unsafe passenger status. A technical benefit may include that the system can limit the propulsion dynamics of the ego vehicle in situations where a passenger is considered to be in an unsafe condition. By comprising an acceleration parameter configured to control a maximum allowable acceleration level, and by reducing this level when the passenger status indicates an unsafe condition, the adaptive cruise control system may avoid sudden or rapid acceleration. The maximum allowable acceleration level may be positive and/or negative.

Optionally in some examples, including in at least one preferred example, the at least one control parameter of the adaptive cruise control system comprises a lateral acceleration parameter configured to control a maximum allowable lateral acceleration level of the ego vehicle, wherein the maximum allowable lateral acceleration level is reduced in response to the passenger status satisfying the at least one predefined criterion indicative of an unsafe passenger status. A technical benefit may include that sharp turns or sudden lateral shifts can be avoided. The maximum allowable lateral acceleration level may be positive and/or negative.

Optionally in some examples, including in at least one preferred example, the processing circuitry is further configured to determine that a manual intervention in the adaptive cruise control system reduces the following distance to the up-front moving object; and in response thereto transmit data to a human-machine interface of the ego vehicle, the data indicating that the passenger status satisfies the at least one predefined criterion. A technical benefit may include that the system can notify the driver when a manual override of the adaptive cruise control system conflicts with passenger safety conditions. The system may improve hereby driver awareness.

Optionally in some examples, including in at least one preferred example, the processing circuitry is further configured to reconfigure the at least one control parameter of the adaptive cruise control system to reduce the following distance in response to the passenger status transitioning from satisfying the at least one predefined criterion to not satisfying the at least one predefined criterion. A technical benefit may include that the system can automatically restore the control behavior when passenger safety conditions improve. By reconfiguring the at least one control parameter to reduce the following distance in response to the passenger status transitioning from unsafe to safe, the adaptive cruise control system may optimize driving efficiency and responsiveness without compromising safety. The adaptive cruise control system may, for example, control the propulsion system such that the following distance is the same or similar to what it was before the processing circuitry determined that the passenger status was unsafe.

According to a second aspect, there is provided a vehicle comprising the computer system of any one of examples described above in relation to the first aspect.

Effects and features of the second aspect are largely analogous to those described above in relation to the first aspect.

According to a third aspect, there is provided a computer-implemented method, comprising: setting, by processing circuitry of a computer system, at least one control parameter of an adaptive cruise control system to control a propulsion system of an ego vehicle to maintain a preset following distance to an up-front moving object, determining, by processing circuitry of a computer system, a passenger status of a passenger of the ego vehicle, and configuring, by processing circuitry of a computer system, the at least one control parameter of the adaptive cruise control system to control the propulsion system to modify the preset following distance to an increased following distance in response to the passenger status satisfying at least one predefined criterion indicative of an unsafe passenger status. The second aspect of the disclosure may seek to solve the problem of maintaining safe operating conditions of an adaptive cruise control system in situations where a passenger within the ego vehicle is not in a safe position. By adapting control parameters such as the following distance based on the passenger's status, the method may contribute to reducing the risk of injury during dynamic maneuvers thereby improving overall passenger safety. A technical benefit may include improved passenger safety by enabling the adaptive cruise control system to dynamically adjust its control behavior based on passenger status. By increasing the following distance when a passenger is in an unsafe position, the method may reduce the need for sudden braking and acceleration, thereby contributing to smoother vehicle operation and minimizing the risk of injury to e.g. unrestrained or improperly positioned passengers.

Further effects and features of the third aspect are largely analogous to those described above in relation to the first aspect.

According to a fourth aspect, there is provided a computer program product comprising program code for performing, when executed by the processing circuitry, the method of the third aspect.

According to a fifth aspect, there is provided a non-transitory computer-readable storage medium comprising instructions, which when executed by the processing circuitry, cause the processing circuitry to perform the method of the third aspect.

Effects and features of the fourth and fifth aspects are largely analogous to those described above in relation to the first and third aspects.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
Fig. 1 is an exemplary illustration of an ego vehicle in the form of a land vehicle according to an example.
Fig. 2 is an exemplary illustration of an ego vehicle in the form of a marine vessel according to an example.
Fig. 3 is an exemplary illustration of controlling an adaptive cruise control system of the marine vessel according to an example.
Fig. 4 is an exemplary flow chart of a method for controlling the adaptive cruise control system according to an example.
Fig. 5 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The following disclosure aims at solving the problem of maintaining safe operating conditions of an adaptive cruise control system in situations where a passenger within an ego vehicle is not in a safe position. A technical benefit may include improved passenger safety by enabling the adaptive cruise control system to dynamically adjust its control behavior based on passenger status.

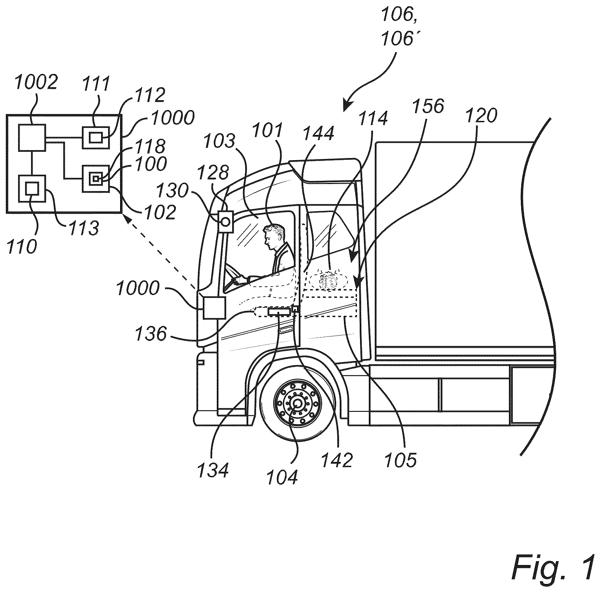

Reference is initially made to Fig. 1, which is an exemplary illustration of an ego vehicle 106 in the form of a land vehicle 106' according to an example. The ego vehicle 106 comprises a propulsion system 104, which is operable to propel the ego vehicle 106 during operation. The propulsion system 104 is exemplified as comprising a prime mover in the form of an electric traction motor configured to apply a torque on at least one wheel of the ego vehicle 106. The prime mover may alternatively, or additionally, be an internal combustion engine.

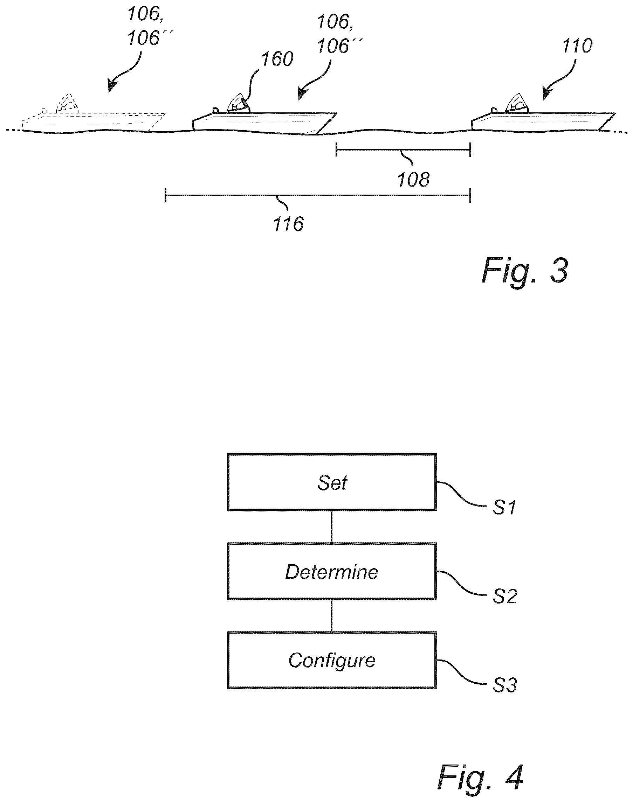

The ego vehicle 106 further comprises a computer system 1000. The computer system 1000 comprises processing circuitry 1002 configured to control various operations of the ego vehicle 106. In particular, the processing circuitry 1002 is configured to control an adaptive cruise control system 102 of the ego vehicle. The adaptive cruise control system 102 is configured to control the propulsion system 104 to maintain a preset following distance to an up-front moving object which is detailed in Fig. 3 for an ego vehicle in the form of a marine vessel 106". In further detail, a control parameter 100 of the adaptive cruise control system 102 controls the propulsion system 104 to maintain the preset following distance to the up-front moving object. The up-front moving object is preferably a vehicle driving in front of the ego vehicle. The up-front moving object may thus, for the exemplified land vehicle 106', be a car, truck, motorcycle or other moving objects driving on roads. Thus, the adaptive cruise control system 102 controls the propulsion system 104 such that the distance to the up-front moving object is substantially the same also if the up-front moving object reduces speed. The preset following distance may vary in dependence of the current speed.

The ego vehicle 106 includes an operator 101 arranged in a driver's seat. The operator 101 thus controls the operation of the ego vehicle 106. When activating the adaptive cruise control system 102, the operator 101 can focus on steering the ego vehicle 106 and pay less focus on maintaining a desired vehicle speed. Also, a passenger 114 is located within the cabin of the ego vehicle 106. The passenger 114 may be seated next to the operator, or positioned in another area of the cabin 103. In the exemplification of Fig. 1, the passenger 114 is sleeping in a bed 105 behind the driver seat. Although this may not be a recommended position for a passenger 114 during operation, it is still an area that can be occupied during driving.

The exemplified computer system 1000 further comprises a passenger status determinator 111. The passenger status determinator 111 is configured to determine a passenger status 112 of the passenger 114. The passenger status 112 may indicate whether the passenger 114 is positioned in a safe or unsafe location within the ego vehicle 106. The exemplified computer system 1000 also comprises an object detector 113. The object detector 113 is configured to detect the presence of an up-front moving object 110. The object detector 113 may be in communication with external perception systems of the ego vehicle 106, such as radar, lidar, or camera systems, to sense and track objects moving ahead of the ego vehicle 106. Based on the detection of such an object, the object detector 113 may provide input to the adaptive cruise control system 102 to enable control of the propulsion system 104 in accordance with a desired or preset following distance 108. Although the passenger status determinator 111 and the object detector 113 are illustrated as separate modules of the computer system 1000, it should be readily understood that these components may be arranged as integrated software in the computer system, or may be arranged as external software.

The ego vehicle 106 further comprises a monitoring system 128. The exemplified monitoring system 128 comprises at least one sensor 130. For the purpose of this disclosure, the at least one sensor 130 is configured to detect the passenger's position within the ego vehicle. The sensor 130 may of course also detect the operator 101 of the ego vehicle 106.

The at least one sensor 130 may comprise one or more perception-type sensors for detecting a current position of the passenger 114 within the ego vehicle 106. In the exemplification of Fig. 1, the sensor 130 comprises at least one of a vision sensor, a lidar, a radar, an infra-red sensor, a Time-of-Flight camera, and a thermal camera. These types of sensors may be positioned to monitor the interior of the cabin 103 and to capture images suitable for identifying where the passenger 114 is located within the ego vehicle 106.

The sensor data acquired by these sensors may be used by the passenger status determinator 111 to determine the passenger status 112, i.e. whether the passenger 114 is located in a predefined zone 156 of the ego vehicle 106. The predefined zone 156 is defined as a specific area within the cabin 103 that may be designated as an unsafe area. The bed 105 behind the driver seat may for example be designated as such unsafe area. The predefined zone 156 may be configured as a two-dimensional or three-dimensional region within the cabin 103.

The exemplified monitoring system 128 in Fig. 1 also comprises a seat sensor 134. The seat sensor 134 is arranged in a passenger seat 136 of the ego vehicle 106 and is configured to detect the presence of a passenger 114 in the passenger seat 136. The seat sensor 134 may be implemented as a weight sensor, pressure sensor, or capacitive sensor embedded in or beneath the seating surface of the passenger seat 136. Additionally, the exemplified monitoring system 128 may comprise a seat belt sensor 142 configured to detect whether a seat belt 144 associated with the passenger seat 136 is fastened. The seat belt sensor 142 may, for example, be positioned within the seat belt buckle to indicate the latched or unlatched status of the seat belt 144. Information from the seat belt sensor 142, preferably in combination with the sear sensor 134, can be used by the passenger status determinator 111 for determining the passenger status 112.

By means of the above description, the processing circuitry 1002 may thus determine if the passenger 114 is sitting safely in the passenger seat, i.e. with the seat belt buckled, or if the passenger 114 is located at an unsafe position, or sitting in unsafely in the passenger seat with an unbuckled seat belt. The passenger status determinator 111 may hence identify a passenger status and assign the passenger status as a safe passenger status or an unsafe passenger status. In particular, the processing circuitry 1002 comprises at least one predefined criterion which is indicative of an unsafe passenger status. Based on the above description, the at least one predefined criterion indicative of an unsafe passenger status may comprise an absence of the passenger 114 from the passenger seat. According to another example, the at least one predefined criterion indicative of an unsafe passenger status comprises that the seat belt 144 is unfastened. According to a further example, the at least one predefined criterion indicative of an unsafe passenger status may comprise that the passenger is located in the at least one predefined zone 156 within the ego vehicle. In the latter example, the bed 105 behind the driver seat can be such predefined zone 156.

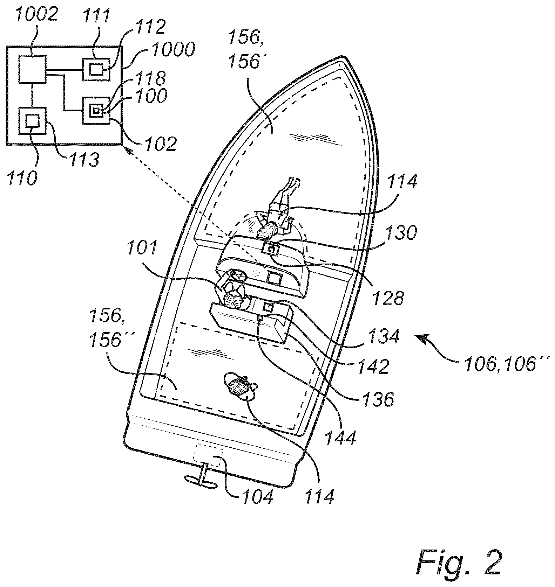

Now, reference is made to Fig. 2 which is an exemplary illustration of the ego vehicle 106 in the form of a marine vessel 106" according to an example. The ego vehicle 106 depicted in Fig. 2 comprises a similar computer system 1000 and monitoring system 128 as described above in relation to the ego vehicle 106 depicted in Fig. 1. For simplifying for the skilled reader, these components will therefore not be described in detail. The monitoring system 128 may thus comprise similar sensors as described above in connection to Fig. 1. The sensors may detect the passenger's position within the marine vessel 106", such as on deck in front of the driving seat, as well as the compartment behind the driving seat.

In particular, the marine vessel 106" depicted in Fig. 2 comprises a predefined zone 156 which is assigned as an unsafe area. In particular, the exemplified marine vessel 106" comprises a first predefined zone 156' arranged in the front of the marine vessel 106", i.e. on the deck of the marine vessel 106". The exemplified marine vessel 106" also comprises a second predefined zone 156" behind the driving seat. The first predefined zone 156' as well as the second predefined zone 156" are both free from seats, i.e. they can be referred to as seat free areas, as well as lacking railings or handholds for the passenger 114 to grasp. Accordingly, a passenger 114 located in one of the first and second predefined zones may risk falling in case of sudden deceleration. Also, a designated seating area for the passenger 114 may be located adjacent to the operator 101 or in a separate compartment, outside of the predefined zones 156', 156". The designated seating area may comprise a seat belt with associated sensors as described above in connection to Fig. 1.

Reference is now made to Fig. 3 which is an exemplary illustration of controlling the adaptive cruise control system according to an example. In particular, Fig. 3 schematically illustrates the ego vehicle 106 in the form of a marine vessel 106" travelling behind an up-front moving object 110 in accordance with an example. The up-front moving object 110 is exemplified as another marine vessel travelling ahead of the ego vehicle 106 in the same direction. Although Fig. 3 exemplifies the marine vessel 106" as the ego vehicle 106, it should be readily understood that the following description is equally applicable for the ego vehicle 106 in the form of the land driven vehicle 106' of Fig. 1.

In the illustrated example, the propulsion system 104 of the marine vessel 106" is controlled by the adaptive cruise control system 102 to maintain a preset following distance 108 to the up-front moving object 110. The preset following distance 108 may correspond to a default time gap or default distance normally maintained by the adaptive cruise control system 102 under standard operational conditions.

The computer system 1000 of the marine vessel 106" comprises the passenger status determinator 111, which is configured to determine a passenger status 112 of the passenger 114 based on input from the monitoring system 128 as described above. When the passenger status 112 satisfies the at least one predefined criterion 118 indicative of an unsafe passenger status, the computer system 1000 is configured to modify the preset following distance 108 to an increased following distance 116. This increased following distance 116 is illustrated by the marine vessel 106" in dashed lines in Fig. 3. Hence, the following distance to the up-front moving object 110 is increased when a passenger is located at an unsafe position.

The increased following distance 116 may reduce the likelihood of sudden deceleration or aggressive braking maneuvers, thereby minimizing the risk of injury to the passenger 114 in cases where the passenger status 112 is considered unsafe. According to examples, and as indicated above, the passenger status 112 may be considered unsafe when the passenger 114 is located in the predefined zone 156', 156", not seated, or unrestrained. The transition from the preset following distance 108 to the increased following distance 116 is automatically managed by the adaptive cruise control system 102 in response to the output from the passenger status determinator 111.

In addition to modifying the following distance, other control parameters of the adaptive cruise control system 102 may be configured to control additional parameters of the propulsion system 104 in response to the passenger status 112. These additional parameters may be adjusted in situations where the passenger status 112 satisfies at least one predefined criterion 118 indicative of an unsafe passenger status.

According to one example, the adaptive cruise control system 102 may comprise an acceleration parameter configured to control a maximum allowable acceleration level of the propulsion system 104. In response to detecting an unsafe passenger status, the adaptive cruise control system 102 may reduce the maximum allowable acceleration level. The reduction of the maximum allowable acceleration level may result in smoother propulsion behavior and may reduce the risk of sudden forward impulses which could affect the safety of the passenger 114, particularly if the passenger is unbelted or located in a predefined zone 156', 156".

According to another example, the adaptive cruise control system 102 may also comprise a lateral acceleration parameter configured to control a maximum allowable lateral acceleration level of the ego vehicle 106. In marine applications, lateral acceleration may be induced, for example, during turning or course correction. In land vehicle applications, lateral acceleration may similarly be generated during cornering or lane changes. In response to an unsafe passenger status, the maximum allowable lateral acceleration level may be reduced to limit rapid side-to-side motion of the vessel. This may be particularly beneficial when the passenger 114 is standing or located in an open area without support structures such as railings or handholds.

Accordingly, the control behavior of the adaptive cruise control system 102 may be dynamically adapted by adjusting not only the following distance 108, but also acceleration-related control parameters, in order to accommodate the current passenger status 112 and improve safety.

As can be understood from the above description, an operator 101 may control the ego vehicle 106. Although the adaptive cruise control system 102 is configured to automatically maintain a suitable following distance based on the passenger status 112, it may be possible for the operator 101 to manually intervene and override the adaptive cruise control behavior. Such manual intervention may, for example, involve the operator adjusting the following distance to a shorter gap, thereby reducing the time or distance margin to the up-front moving object 110.

In situations where the passenger status 112 satisfies the predefined criterion 118 indicative of an unsafe passenger status 120 as detailed above, the manual intervention to reduce the following distance may not be desirable from a safety perspective. The computer system 1000 may therefore be configured to detect that the manual intervention has resulted in the following distance falling below a safety threshold under current passenger conditions.

In response to such detection, the computer system 1000 may be configured to transmit data to a human-machine interface 160 of the ego vehicle 106. The data may indicate that the current passenger status 112 is classified as unsafe and that the reduced following distance may compromise safety. The human-machine interface 160 may provide a visual, auditory, or haptic warning to the operator 101, prompting corrective action or increased attention to the passenger's condition.

The above description has been focused on the actions taken when the current passenger status 112 is classified as unsafe. However, in some situations, the passenger 114 may return to a safe position or condition within the ego vehicle 106. For example, the passenger 114 may move from a predefined zone 156 to a designated seat, fasten the seat belt 144, or otherwise transition from an unsafe to a safe passenger status.

In response to such a transition, the processing circuitry 1002 may be configured to reconfigure the at least one control parameter 100 of the adaptive cruise control system 102. In particular, the control parameter that controls the following distance may be adjusted to reduce the following distance 108, thereby restoring the system to a normal or default operational state. The reduced following distance may, for example, correspond to the same value or setting that was in effect prior to the system detecting the unsafe passenger status.

In order to sum up, reference is made to Fig. 4 which is an exemplary flow chart of a method for controlling the adaptive cruise control system according to an example. The method is implemented by the processing circuitry 1002 of the above described computer system 1000. During operation of the ego vehicle 106, the processing circuitry 1002 sets S1 at least one control parameter 100 of the adaptive cruise control system 102. The at least one control parameter 100 is set to control the propulsion system 104 of the ego vehicle 106 such that a preset following distance 108 is maintained to an up-front moving object 110. The preset following distance 108 may correspond to a default distance value suitable for normal operating conditions.

The processing circuitry 1002 also determines S2 a passenger status 112 of a passenger 114 of the ego vehicle 106. The passenger status 112 may be determined based on sensor data received from a monitoring system 128 and may reflect whether the passenger 114 is located in a safe or unsafe position within the ego vehicle 106.

Thereafter, the processing circuitry 1002 configures the at least one control parameter 100 of the adaptive cruise control system 102 to modify the preset following distance 108 to an increased following distance 116. This modification is performed when the passenger status 112 satisfies at least one predefined criterion 118 indicating an unsafe passenger status, such as when the passenger is located in the predefined zone, is unrestrained, or is otherwise determined to be in an unsafe position.

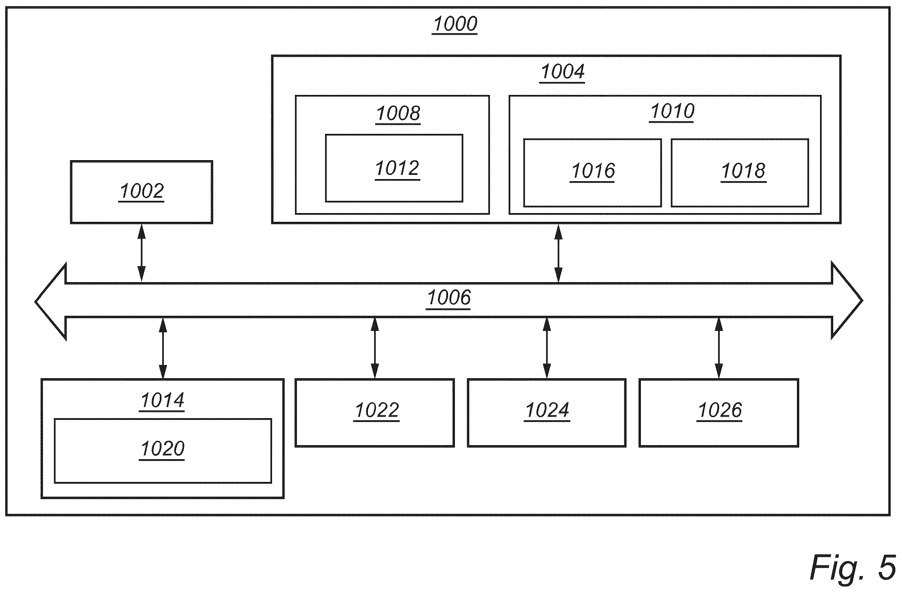

Fig. 5 is a schematic diagram of a computer system 1000 for implementing examples disclosed herein. The computer system 1000 is adapted to execute instructions from a computer-readable medium to perform these and/or any of the functions or processing described herein. The computer system 1000 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

### EXAMPLE LIST

Example 1. A computer system comprising processing circuitry configured to: set at least one control parameter of an adaptive cruise control system to control a propulsion system of an ego vehicle to maintain a preset following distance to an up-front moving object, determine a passenger status of a passenger of the ego vehicle, and configure the at least one control parameter of the adaptive cruise control system to control the propulsion system to modify the preset following distance to an increased following distance in response to the passenger status satisfying at least one predefined criterion indicative of an unsafe passenger status.

Example 2. The computer system of example 1, wherein the ego vehicle is a marine vessel or a land vehicle.

Example 3. The computer system of any one of examples 1 or 2, wherein the passenger status is determined in response to receiving passenger monitoring data received from a monitoring system of the ego vehicle.

Example 4. The computer system of example 3, wherein the monitoring system comprises at least one sensor configured to detect the passenger's position within the ego vehicle.

Example 5. The computer system of example 4, wherein the at least one sensor comprises a seat sensor arranged in a passenger seat of the ego vehicle, the seat sensor being configured to detect the presence of a passenger in the passenger seat.

Example 6. The computer system of example 5, wherein the at least one predefined criterion indicative of an unsafe passenger status comprises an absence of a passenger from the passenger seat.

Example 7. The computer system of any one of examples 4 to 6, wherein the at least one sensor comprises a seat belt sensor configured to detect whether a seat belt is fastened.

Example 8. The computer system of example 7, wherein the at least one predefined criterion indicative of an unsafe passenger status comprises that a seat belt is unfastened.

Example 9. The computer system of any one of examples 4 to 8, wherein the at least one sensor comprises at least one of a vision sensor, a lidar, a radar, an infra-red sensor, a Time-of-Flight camera and a thermal camera.

Example 10. The computer system of example 9, wherein the at least one predefined criterion indicative of an unsafe passenger status comprises the passenger being located in at least one predefined zone within the ego vehicle.

Example 11. The computer system of example 10, wherein the predefined zone is a seat free area of the ego vehicle.

Example 12. The computer system of any one of examples 10 or 11, wherein the predefined zone is an area within the ego vehicle that lacks a railing or a handhold for a passenger to grasp.

Example 13. The computer system of any one of the preceding examples, wherein the at least one control parameter of the adaptive cruise control system comprises an acceleration parameter configured to control a maximum allowable acceleration level of the propulsion system, wherein the maximum allowable acceleration level is reduced in response to the passenger status satisfying the at least one predefined criterion indicative of an unsafe passenger status.

Example 14. The computer system of any one of the preceding examples, wherein the at least one control parameter of the adaptive cruise control system comprises a lateral acceleration parameter configured to control a maximum allowable lateral acceleration level of the ego vehicle, wherein the maximum allowable lateral acceleration level is reduced in response to the passenger status satisfying the at least one predefined criterion indicative of an unsafe passenger status.

Example 15. The computer system of any one of the preceding examples, wherein the processing circuitry is further configured to: determine that a manual intervention in the adaptive cruise control system reduces the following distance to the up-front moving object; and in response thereto: transmit data to a human-machine interface of the ego vehicle, the data indicating that the passenger status satisfies the at least one predefined criterion.

Example 16. The computer system of any one of the preceding examples, wherein the processing circuitry is further configured to: reconfigure the at least one control parameter of the adaptive cruise control system to reduce the following distance in response to the passenger status transitioning from satisfying the at least one predefined criterion to not satisfying the at least one predefined criterion.

Example 17. A vehicle comprising the computer system of any one of examples 1 - 16.

Example 18. A computer-implemented method, comprising: setting, by processing circuitry of a computer system, at least one control parameter of an adaptive cruise control system to control a propulsion system of an ego vehicle to maintain a preset following distance to an up-front moving object, determining, by processing circuitry of a computer system, a passenger status of a passenger of the ego vehicle, and configuring, by processing circuitry of a computer system, the at least one control parameter of the adaptive cruise control system to control the propulsion system to modify the preset following distance to an increased following distance in response to the passenger status satisfying at least one predefined criterion indicative of an unsafe passenger status.

Example 19. A computer program product comprising program code for performing, when executed by the processing circuitry, the method of example 18.

Example 20. A non-transitory computer-readable storage medium comprising instructions, which when executed by the processing circuitry, cause the processing circuitry to perform the method of example 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising processing circuitry configured to:
set at least one control parameter (100) of an adaptive cruise control system (102) to control a propulsion system (104) of a marine vessel (106) to maintain a preset following distance (108) to an up-front moving object (110),
determine a passenger status (112) of a passenger (114) of the marine vessel, and
configure the at least one control parameter of the adaptive cruise control system to control the propulsion system to modify the preset following distance (108) to an increased following distance (116) in response to the passenger status satisfying at least one predefined criterion (118) indicative of an unsafe passenger status, the at least one predefined criterion indicative of an unsafe passenger status comprising the passenger being located in at least one predefined zone (156) within the marine vessel that lacks a railing or a handhold for a passenger to grasp.

2. The computer system of claim 1, wherein the passenger status is determined in response to receiving passenger monitoring data received from a monitoring system (128) of the marine vessel.

3. The computer system of claim 2, wherein the monitoring system (128) comprises at least one sensor (130) configured to detect the passenger's position within the marine vessel.

4. The computer system of claim 3, wherein the at least one sensor (130) comprises a seat sensor (134) arranged in a passenger seat (136) of the marine vessel, the seat sensor being configured to detect the presence of a passenger in the passenger seat.

5. The computer system of claim 4, wherein the at least one predefined criterion indicative of an unsafe passenger status comprises an absence of a passenger from the passenger seat.

6. The computer system of any one of claims 3 to 5, wherein the at least one sensor comprises at least one of a vision sensor, a lidar, a radar, an infra-red sensor, a Time-of-Flight camera and a thermal camera.

7. The computer system of any one of the preceding claims, wherein the predefined zone (156) is a seat free area of the marine vessel.

8. The computer system of any one of the preceding claims, wherein the at least one control parameter of the adaptive cruise control system comprises an acceleration parameter configured to control a maximum allowable acceleration level of the propulsion system, wherein the maximum allowable acceleration level is reduced in response to the passenger status satisfying the at least one predefined criterion indicative of an unsafe passenger status.

9. The computer system of any one of the preceding claims, wherein the at least one control parameter of the adaptive cruise control system comprises a lateral acceleration parameter configured to control a maximum allowable lateral acceleration level of the marine vessel, wherein the maximum allowable lateral acceleration level is reduced in response to the passenger status satisfying the at least one predefined criterion indicative of an unsafe passenger status.

10. The computer system of any one of the preceding claims, wherein the processing circuitry is further configured to:
determine that a manual intervention in the adaptive cruise control system reduces the following distance to the up-front moving object; and in response thereto:
transmit data to a human-machine interface (160) of the marine vessel, the data indicating that the passenger status satisfies the at least one predefined criterion.

11. The computer system of any one of the preceding claims, wherein the processing circuitry is further configured to:
reconfigure the at least one control parameter of the adaptive cruise control system to reduce the following distance in response to the passenger status transitioning from satisfying the at least one predefined criterion to not satisfying the at least one predefined criterion.

12. A marine vessel comprising the computer system of any one of claims 1 - 11.

13. A computer-implemented method, comprising:
setting (S1), by processing circuitry of a computer system, at least one control parameter of an adaptive cruise control system to control a propulsion system of a marine vessel to maintain a preset following distance to an up-front moving object,
determining (S2), by processing circuitry of a computer system, a passenger status of a passenger of the marine vessel, and
configuring (S3), by processing circuitry of a computer system, the at least one control parameter of the adaptive cruise control system to control the propulsion system to modify the preset following distance to an increased following distance in response to the passenger status satisfying at least one predefined criterion indicative of an unsafe passenger status, the at least one predefined criterion indicative of an unsafe passenger status comprising the passenger being located in at least one predefined zone (156) within the marine vessel that lacks a railing or a handhold for a passenger to grasp.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.
